Europäisches Patentamt

European Patent Office

Office européen des brevets

(19)

(11) Publication number : **0 335 469 B1**

# (12) EUROPEAN PATENT SPECIFICATION

(45) Date of publication of patent specification :
15.02.95 Bulletin 95/07

(51) Int. Cl.[6] : **G11B 7/00**, G11B 7/24

(21) Application number : **89200786.5**

(22) Date of filing : **28.03.89**

(54) **Information-recording thin film and method for recording and reproducing information.**

(30) Priority : **28.03.88 JP 72143/88**

(43) Date of publication of application :
**04.10.89 Bulletin 89/40**

(45) Publication of the grant of the patent :
**15.02.95 Bulletin 95/07**

(84) Designated Contracting States :
**FR NL**

(56) References cited :
**EP-A- 0 195 532**
**EP-A- 0 294 932**
**JP-A-63 029 333**

(73) Proprietor : **HITACHI, LTD.**
**6, Kanda Surugadai 4-chome**
**Chiyoda-ku, Tokyo 100 (JP)**
Proprietor : **Hitachi Maxell Ltd.**
**No 1-1-88, Ushitora**
**Ibaraki-shi**
**Osaka-fu (JP)**

(72) Inventor : **Nishida, Tetsuya**
**Hitachi Koyasudai Apartment D-201**
**32, Koyasumachi-2-chome Hachioji-shi (JP)**
Inventor : **Terao, Motoyasu**
**2196-383, Hirai**
**hinodemachi**
**Nishitama-gun Tokyo (JP)**
Inventor : **Tamura, Reiji**
**Shihoryo**
**1468-5, Furumagi**
**Ishigemachi**
**Yuki-gun Ibaraki-ken (JP)**
Inventor : **Miyauchi, Yasushi**
**Hitachi Owada Apartment E-404**
**47-2, Akatsukicho-1-chome Hachioji-shi (JP)**
Inventor : **Andoo, Keikichi**
**2-7, Yahatacho-4-chome**
**Musashino-shi (JP)**

(74) Representative : **van der Veken, Johannes**
**Adriaan et al**
**EXTERPATENT B.V.**
**P.O. Box 3241**
**NL-2280 GE Rijswijk (NL)**

**Description**

BACKGROUND OF THE INVENTION

This invention relates to an information-recording thin film capable of recording frequency modulated analog signals such as images, voices, etc. or digital information such as electronic computer data, digital audio signal, etc. in real time by a recording beam, such as laser beam, electron beam, etc.

Principles of recording on a thin film by an energy beam such as a laser beam are various, and the recording based on changes in phases between an amorphous phase- a crystalline phase, a crystalline phase - another crystalline phase and an amorphous phase - another amorphous phase, and also changes in atomic configuration by photo-darkening, etc. brings about no substantial deformation of the film, and thus has such advantages that a two-side disk can be obtained by directly bonding two disks and rewriting of recording can be made. Many inventions of such recording have been so far made, and one of the earliest ones is disclosed in US Patent No. 3,530,441, where many thin films of Te-Ge, As-Te-Ge, Te-O, etc. are mentioned.

Information recording thin films containing 4 or more elements including Ge, Te and Sb as the main components are disclosed in Japanese Patent Application Kokai (Laid-open) No. 61-258787 where the composition of the information recording thin films is represented by the following formula.

$$\{(Sb_xTe_{I-x})_y(Ge_{I-y})\}_{I-z}M_z$$

where x is 0.2 to 0.7, y is 0.4 to 0.8 and z is 0.01 to 0.5; and M is an element selected from the group consisting of metallic elements up to the atomic number 37, such as Al, Si, Ti, etc. Similar subject-matter is also disclosed in corresponding EP-A-0 195 532 where M can be Zn, In, Cd, Sn, Se, Tl, Pb, Bi, An, Ag, or Cu.

However, all of these prior art thin films have disadvantages, when used as once-writable (write-once) or rewritable (reversible) phase transition recording film, such as low crystallization speed during the energy beam irradiation owing to the low activation energy for the crystallization at amorphous recording points, a poor stability of amorphous state at the ordinary temperature or an inadequate reproduced signal intensity, an inadequate number of repetitions of rewriting, insufficient erasing of the preceding signal, after-image, when overwritting is carried out with a single beam, etc. and thus there have been problems in their practical applications.

SUMMARY OF THE INVENTION

One object of the present invention is to provide an information-recording thin film having good recording, reproduction and erasing characteristics and a good stability, free from the foregoing disadvantages of the prior art.

Another object of the present invention is to provide a method for recording and reproducing information, using the foregoing information-recording thin film.

That is, the present invention provides an information-recording thin film having an average composition represented by the following formula in the direction perpendicular to the film plane:

$$Ge_XTe_YSb_ZA_\alpha B_\beta$$

wherein $2 \leqq X \leqq 9$, $45 \leqq Y \leqq 70$, $11 \leqq Z \leqq 54$, $0 \leqq \alpha \leqq 20$, $0 \leqq \beta \leqq 20$ and $1 \leqq \alpha + \beta \leqq 20$, in atomic percentages; A is at least one element of Tl, halogen elements and alkali metal elements; and B is at least one element of Co, Fe, Ni, Sc, Ti, V, Cr, Mn, Cu, Zn, Y, Zr, Nb, Mo, Ru, Rh, Pd, Ag, Cd, Hf, Ta, W, Re, Os, Ir, Pt, and Au.

The presence of element A cuts off spiral atomic configuration of Te in a material containing Te and is effective for accelerating the crystallisation speed.

In addition to the foregoing elements, a small amount of other elements may be contained. For example, addition of 1 atomic % to 20 atomic % of Se in place of a portion of Te is effective for improving the oxidation resistance. From the viewpoint of easy preparation of the thin film, addition of not more than 10 atomic %, particularly not more than 1 atomic %, of these other element is preferable.

The average composition in the direction perpendicular to the film plane of the present information-recording thin film may be changed so long as the composition is kept within the foregoing ranges. However, it is preferable that the change in the composition is not discontinuous. Transition metal elements such as Co, etc., that is, the elements represented by B in the foregoing formula, can effectively facilitate absorption of light with a long wavelength, such as a semi-conductor laser beam, etc., thereby increasing the recording sensitivity and can also make the crystallization temperature higher, that is, can improve the stability of amorphous state.

The present information-recording thin film within the foregoing composition ranges has distinguished recording-reproducing characteristics with a lower laser beam power for the recording and erasing, and also has a good stability.

More preferable ranges for X, Y, Z, $\alpha$ and $\beta$ are $2 \leqq X \leqq 9$, $54 \leqq Y \leqq 67$, $22 \leqq Z \leqq 42$, $0 \leqq \alpha \leqq 10$, $0 \leqq \beta \leqq$

15 and $2 \leqq \alpha + \beta \leqq 20$.

It is more preferable that at least two of these conditions are satisfied at the same time. It is more preferable if $2 \leqq \beta \leqq 15$ is satisfied.

Particularly preferable ranges for X, Y, Z, $\alpha$ and $\beta$ are $2 \leqq X \leqq 9$, $54 \leqq Y \leqq 67$, $22 \leqq Z \leqq 42$, $1 \leqq \alpha \leqq 7$, $1 \leqq \beta \leqq 10$ and $2 \leqq \alpha + \beta \leqq 15$. All of these conditions must be satisfied at the same time.

Among the elements represented by A in the foregoing formula, Tl is particularly preferable and I and Na are next preferable.

It should be noted that EP-A-0 294 932 belonging to the state of art according to article 54 (3) discloses an information - recording thin film having an average composition represented by the formula $(Te_x Ge_y Sb_{1-x-y})_{1-z}M_z$, wherein M is at least one element selected from the group consisting of Pb, Bi, In, Sn and Tl, and $0{,}3 \leqq x \leqq 0{,}7$, $0{,}1 \leqq y$, $0{,}01 \leqq z \leqq 0{,}3$ and $x + y < 1$ and according to example 2 the layer is represented by the formula $(Te_{0,5} Ge_{0,2} Sb_{0,3})_{0,9} Tl_{0,1}$ equivalent to $Te_{45} Ge_{18} Sb_{27} Tl_{10}$.

When only either the element represented by A or the element represented by B is contained, the element represented by A is preferable with respect to easy preparation of a thin film, whereas the element represented by B is preferable with respect to the oxidation resistance.

It is preferable that at least one side of the present information-recording thin film is tightly covered and protected with other material, and it is more preferable to protect the two sides. The protective layer may be composed of a synthetic resin (organopolymer compound) plates such as acrylic resin plate, polycarbonate plate, epoxy resin plate, etc. which serve also as a substrate, or organic materials such as acrylic resins, polystyrene, polycarbonate, epoxy resins, polyimides, polyamides, polyethylene, etc., or may be composed of inorganic materials containing oxides, fluorides, nitrides, sulfides, carbides, borides, boron, carbon or metals as the main component, or may be composed of their composite materials.

It is preferable that at least one of the protective layers adjacent to the information-recording thin film is composed of the inorganic material. A substrate composed of glass, quartz, sapphire, iron, titanium, or aluminum as the main component can work as an inorganic protective layer. Among the organic and inorganic materials, tight covering with the inorganic materials is preferable with respect to the heat resistance. However, a thicker inorganic material layer (excluding the application as a substrate) is liable to cause at least one of crack development, decrease in transmissivity, and decrease in sensitivity, and thus the inorganic material layer must be made thinner, and it is preferable to tightly cover the opposite side of the inorganic material layer to the recording film side with a thicker organic material layer to increase the mechanical strength. The organic material layer may be a substrate. Deformation can be made less thereby. The organic materials for use to this end include, for example, polystyrene, polyimides, polyamides, polycarbonate, epoxy resin, ethylene-vinyl acetate copolymer, etc. known as hot-melt adhesives, and tackifying agents, etc. UV light curing resin may be used. A protective layer composed of inorganic materials can be formed as such by electron beam deposition, sputtering, etc. or can be more readily formed by reactive sputtering, or by forming a film composed of at least one element of metals, semi-metals and semiconductors, and reacting the film with at least one of oxygen, sulfur and nitrogen. Inorganic material protective layers are composed of, for example, oxides of at least one element selected from the group consisting of Ce, La, Si, In, Al, Ge, Pb, Sn, Bi, Te, Ta, Sc, Y, Ti, Zr, V, Nb, Cr, and W, sulfides or selenides of at least one element selected from the group consisting of Cd, Zn, Ga, In, Sb, Ge, Sn, and Pb, fluorides of Mg, Ce, Ca, etc., nitrides of Si, Al, Ta, B, etc., borides of Ti, etc., crabides of B, etc., and boron and carbon, and the main component has a composition approximating to one of, for example, $CeO_2$, $La_2O_3$, $SiO$, $SiO_2$, $In_2O_3$, $Al_2O_3$, $GeO$, $GeO_2$, $PbO$, $SnO$, $SnO_2$, $Bi_2O_3$, $TeO_2$, $WO_2$, $WO_3$, $Ta_2O_5$, $Sc_2O_3$, $Y_2O_3$, $TiO_2$, $ZrO_2$, $CdS$, $SnS$, $CdSe$, $ZnSe$, $In_2S_3$, $In_2Se_3$, $Sb_2S_3$, $Sb_2Se_3$, $Ga_2S_3$, $MgF_2$, $CeF_2$, $CeF_3$, $CaF_2$, $GeS$, $GeSe$, $GeSe_2$, $SnS$, $SnSe$, $PbS$, $PbSe$, $Bi_2Se_3$, $TaN$, $Si_3N_4$, $AlN$, $Si$, $TiB_2$, $B_4C$, $SiC$, B and C.

Among these materials, nitrides have not so high surface reflectivity and can produce a stable film, and a composition approximating to $TaN$, $Si_3N_4$ or $AlN$ is preferable with respect to rigidity. Preferable oxides have a composition approximating to $Y_2O_3$, $Sc_2O_3$, $CeO_2$, $TiO_2$, $ZrO_2$, $In_2O_3$, $Al_2O_3$, $SnO_2$ or $SiO_2$. Si or C is also preferable.

When a thin film is exposed to light, the reflected light is generally a superposition of a reflected light from the thin film surface and another reflected light from the back side of the thin film, and thus undergoes an interference. When a signal is read through changes in the reflectivity, the effect of interference is increased by providing a reflecting (absorbing) layer near the recording film, and consequently the read-out signal can be intensified. To more increase the effect of interference, it is preferable to provide an intermediate layer between the recording film and the reflecting (absorbing) layer. The intermediate layer is also effective for preventing interdiffusion between the recording film and the reflecting layer at the recording and rewriting.

The present recording film can be dispersed in the oxides, fluorides, nitrides, organic materials, etc., or carbon or carbides mentioned above to be applicable as a protective layer by co-vapor deposition or co-sputtering, whereby in some cases the light absorption coefficient can be adjusted or the reproduced signal intensity can be increased. Preferable mixing ratio is such that a proportion of oxygen, fluorine, nitrogen, and carbon in the entire film be 40 atomic % or less. By making a composite film in this manner, usually the crystallization speed is lowered and the sensitivity is lowered. However, the sensitivity is increased by making a composite film with an organic material.

Preferable ranges for the thickness of the individual members are as follows:

Recording film:

for structures without reflecting layer, 60 to 350 nm, particularly preferably 80 to 200 nm with respect to the reproduced signal intensity; for structures containing a reflecting layer: 15 to 100 nm;

Protective layer of inorganic material:

5 nm to 500 nm; in the case of protection by a substrate of inorganic material itself, 0.1 to 20 nm;

Protective layer of organic material:

10 nm to 10 mm;

Intermediate layer:

3 to 500 nm;

Light-reflecting layer:

5 to 300 nm

The foregoing individual layers can be formed by vacuum evaporation, evaporation in a gas, sputtering, ion beam sputtering, ion beam deposition, ion plating, electron beam deposition, casting, spin coating, plasma polymerization, etc. upon proper selection.

In the present recording film, it is not always necessary to utilize a change between the amorphous state and the crystalline state for recording, but only optical properties must be changed by a change in the atomic configuration such as a change in the degree of crystallization, a change in the crystal form or crystal grain size, etc.

The present recording member can be used not only in a disk form, but also in a tape form, a card form or in any other form.

The present information-recording thin film has a high crystallization speed, a high stability of amorphous state, a much absorption of semiconductor laser beam, a high reproduced signal intensity and a good oxidation resistance, and thus has distinguished recording and erasing characteristics, a high sensitivity and a high stability of recorded state.

## BRIEF DESCRIPTION OF THE DRAWINGS

Fig. 1 is a cross-sectional profile of an information-recording thin film according to one embodiment of the present invention.

Fig. 2 is a schematic view showing the internal structure of a vacuum evaporation apparatus for use in preparation of the present information-recording thin film.

Fig. 3 is a diagram showing the wave form of a recording laser power according to one embodiment of the present invention.

## PREFERRED EMBODIMENTS OF THE INVENTION

### Example

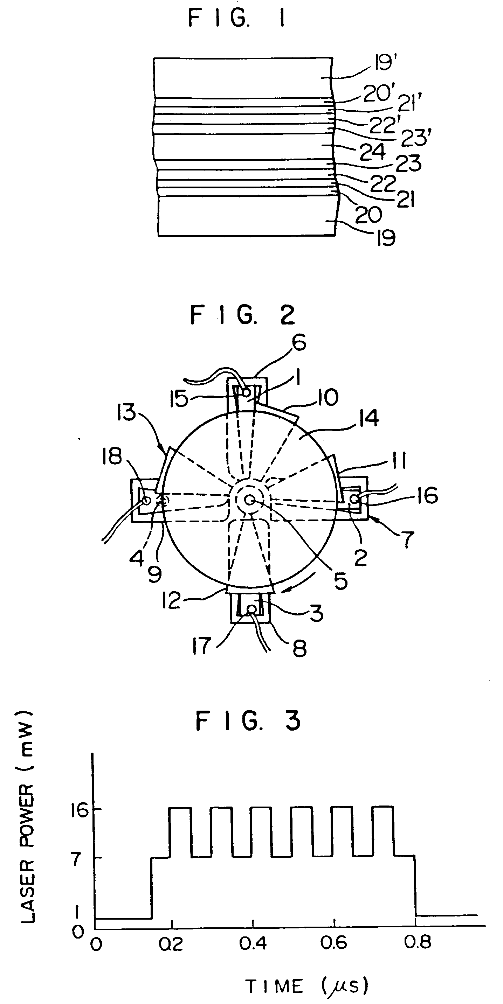

A ZnS layer 20 as a reflection-preventing and protective layer was formed at first onto a polycarbonate substrate 19, on whose surface were formed in advance tracking grooves and address pits, by magnetron sputtering to a thickness of 100 nm, as shown in Fig. 1. Then, the substrate 19 was disposed in a vacuum evaporation apparatus with an internal structure as shown in Fig. 2, and 4 evaporation sources 1, 2, 3 and 4 were provided in the evaporation apparatus. Three of the evaporation sources were evaporation boats by resistance heating and one thereof is an electron beam evaporation source. These boats and electron beam evaporation source were provided under parts on the substrate 14 destined to record information and substantially on a circumference concentric with the center axis of rotation of the substrate. Then, Ge, Te and a Sb-Tl mixture were placed in the three evaporation boats and Co was placed in the electron beam evaporation source.

Between the individual boats and the substrate there were provided masks 6, 7, 8 and 9 having a sector slit and shutters 10, 11, 12 and 13. The substrate 14 was set to rotate at 120 rpm, while an electric current was passed to the individual boat and a electron beam was irradiated onto the electron beam evaporation source to evaporate the source materials. Co could be also evaporated from an evaporation boat by resistance heating.

As shown in Fig. 1, a recording film 21 having a composition of $Ge_8Te_{55}Sb_{32}Tl_5$ was deposited onto the ZnS layer 20 on the substrate 19 to a thickness of about 100 nm. The film thickness was such that the light reflected on the interface of the recording film with the substrate-side protective layer interfered with the light reflected on the back side of the recording film and the reflectivity became substantially a minimum at the wavelength of laser beam used for the read-out when the recording film was in an amorphous state or in a poorly crystallized state. Then, an intermediate layer 22 having a composition substantially equal to ZnS was successively formed to a film thickness of about 200 nm thereon also by magnetron sputtering. Finally, a Ni reflective layer 23 was formed thereon to a thickness of 100 nm. Likewise, a protective layer 20′ having a composition substantially equal to ZnS was vapor deposited onto a similar substrate 19′, and then a recording film 21′ having the composition of $Ge_8Te_{55}Sb_{32}Tl_5$ and an intermediate layer 22′ having a composition substantially equal to ZnS and a Ni reflective layer 23′ were successively vapor deposited thereon. The thus prepared two substrates 19 and 19′ were joined together by pasting through an organic adhesive layer 24 so that the Ni-reflective layers 23 and 23′ could be faced inwardly to prepare a disk.

Recording of the thus prepared disk in an optical disk drive (recording and reproducing apparatus) was carried out in the following manner.

The disk was rotated at 1,800 rpm, and one of the recording films was exposed to a beam of semi-conductor laser (wavelength : 820 nm), kept at a non-recording power level (about 1 mW) and condensed by a lens in the recording head, through the substrate. The reflected light was detected while driving the head so that the center of the light spot could always fall into the tracking groove.

Automatic focusing was carried out so that the focus could fall on the recording film while conducting the tracking in this manner, and in the recording part recording was carried out by changing a laser power between 7 mW at which the crystallization took place, and 16 mW at which formation of an amorphous state took place, as shown in Fig. 3. The substantially amorphous portion in the recorded part was regarded as a recording point. After the recording part, the laser power was lowered to 1 mW, and the tracking and automatic focusing were continued. During the recording, the tracking and autofocusing were continued. When such recording procedure was applied to the already recorded part, the recorded information was replaced with newly recorded information. That is, it was possible to make overwriting by a single circular light spot.

It is needless to say that, after erasing by irradiation with a specific power, recording may be carried by irradiation with a modulated power. It is the feature of the present recording film material as disclosed in this Example that such overwriting is possible in this manner, and the retention time of recorded state is longer.

Recording and erasing could be carried out in repetitions of at least $3 \times 10^5$. Without the ZnS layers over and below recording films, the noise was slightly increased after a few repetitions of recording and erasing.

Read-out was carried out in the following manner.

The disk was rotated at 1,800 rpm, and the intensity of reflected light of semi-conductor laser beam with such a low power not enough to effect recording and erasing was detected to reproduce information, while conducting the tracking and autofocusing in the same manner as in the recording. In this Example, reproduced signal voltage of about 100 mV was obtained. The recording film according to this Example also had a good oxidation resistance. For example, the recording film without formation of the ZnS protective layer or Ni protective layer was not substantially oxidized even if placed at 60°C and a relative humidity of 95%.

The activation energy for crystallization of substantially amorphous portion formed by laser beam irradiation was as high as 3.0 eV.

When in the foregoing recording film of Ge-Te-Sb-Tl system, the Ge content was varied, while keeping the Tl content constant at 1 atomic % and the Te and Sb contents in a constant ratio, the necessary irradiation time for the crystallization was changed as follows:

```
                              Crystallization time

        X  =  0  atomic  %              0.15 μs

        X  =  2                         0.1  μs

        X  =  3                         0.08 μs

        X  =  5                         0.06 μs

        X  =  6                         0.08 μs

        X  =  9                         0.1  μs

        X  =  14                        0.13 μs

        X  =  18                        0.3  μs

        X  =  20                        0.4  μs

        X  =  25                        1    μs

        X  =  40                        2    μs
```

When in the foregoing recording film of Ge-Te-Sb-Tl system, a ratio of Te to Sb was varied while keeping the Tl content constant at 1 atomic % and the Ge content constant at 12 atomic %, the necessary irradiation time for the crystallization was changed as follows:

```
                              Crystallization time

        Y = 73   Z = 14               0.6  μs

        Y = 70   Z = 17               0.3  μs

        Y = 67   Z = 20               0.2  μs

        Y = 65   Z = 22               0.15 μs

        Y = 56   Z = 31               0.15 μs

        Y = 54   Z = 33               0.2  μs



                              Crystallization time

        Y = 50   Z = 37               0.25 μs

        Y = 45   Z = 42               0.3  μs

        Y = 40   Z = 47               0.6  μs
```

When in the foregoing the Tl content was kept constant at 1 atomic % and the Ge content constant at 18 atomic %, the following crystallization time was obtained:

6

Crystallization time

| Y = 70 | Z = 11 | 0.3 μs |
|--------|--------|--------|
| Y = 45 | Z = 36 | 0.3 μs |

When in the foregoing the Tl content was kept constant at 1 atomic %, the following crystallization time was obtained:

Crystallization time

| Y = 73 | Z = 26 | 0.6 μs |
|--------|--------|--------|
| Y = 70 | Z = 29 | 0.3 μs |
| Y = 67 | Z = 32 | 0.2 μs |
| Y = 65 | Z = 34 | 0.15 μs |
| Y = 56 | Z = 43 | 0.15 μs |
| Y = 54 | Z = 45 | 0.15 μs |
| Y = 50 | Z = 47 | 0.2 μs |
| Y = 45 | Z = 54 | 0.3 μs |
| Y = 40 | Z = 59 | 0.6 μs |

When in the foregoing the Tl content was kept constant at 2 atomic %, the following crystallization time was obtained:

Crystallization time

| Y = 73 | Z = 19 | 0.6 μs |
|--------|--------|--------|
| Y = 70 | Z = 22 | 0.2 μs |
| Y = 67 | Z = 25 | 0.1 μs |
| Y = 65 | Z = 27 | 0.08 μs |
| Y = 56 | Z = 36 | 0.08 μs |
| Y = 54 | Z = 38 | 0.1 μs |
| Y = 50 | Z = 42 | 0.2 μs |
| Y = 45 | Z = 47 | 0.3 μs |
| Y = 40 | Z = 52 | 0.6 μs |

When in the foregoing the Tl content was kept constant at 2 atomic % and the Ge content constant at 9 atomic %, the following crystallization time was obtained:

```
                              Crystallization time
         Y = 67   Z = 22              0.1 µs

         Y = 54   Z = 35              0.1 µs
```

When in the foregoing the Tl content was kept constant at 2 atomic % and the Ge content constant at 2 atomic %, the following crystallization time was obtained:

```
                              Crystallization time
         Y = 67   Z = 29              0.1 µs

         Y = 54   Z = 42              0.1 µs
```

When in the foregoing recording film of Ge-Te-Sb-Tl system the Tl content was varied while keeping a ratio of Ge, Te, and Sb constant, the crystallization time and the surface reflectivity with no protective layers were changed as follows:

|  | Crystallization time | Change in surface reflectivity when kept at 60°C for one month |
|---|---|---|
| $\alpha$ = 0 | 300 ns [0.3 µs] | 0% |
| $\alpha$ = 0.5 | 250 ns | 0% |
| $\alpha$ = 1 | 200 ns | 0% |
| $\alpha$ = 2 | 100 ns | 0% |
| $\alpha$ = 7 | 50 ns | -2% |
| $\alpha$ = 10 | 50 ns | -5% |
| $\alpha$ = 15 | 50 ns | -8% |
| $\alpha$ = 20 | 50 ns | -10% |
| $\alpha$ = 25 | 50 ns | -20% |

Deterioration by oxidation when left standing for a time before the deposition of the protective layer thereon was remarkable when the Tl content exceeded 20 atomic %.

When at least one element of halogens and alkali metals was added in place of a portion or all of Tl, quite similar characteristics were obtained. I was particularly preferable among the halogens F, Cl, Br and I, and Cl is next preferable. Na was particularly preferable among the alkali metals Li, Na, K, Rb and Cs, and K was next preferable.

When in the foregoing recording film of Ge-Te-Sb-Tl system Co was added in place of Tl (i.e. zero Tl content) and the Co content was varied while keeping the ratio of Ge to Te to Sb constant, the crystallization temperature was changed as follows:

Crystallization temperature

| $\beta$ | = | 0 | 125°C |
|---|---|---|---|
| $\beta$ | = | 0.5 | 160°C |
| $\beta$ | = | 1 | 200°C |
| $\beta$ | = | 2 | 240°C |
| $\beta$ | = | 5 | 260°C |
| $\beta$ | = | 10 | 260°C |
| $\beta$ | = | 15 | 240°C |
| $\beta$ | = | 20 | 200°C |
| $\beta$ | = | 25 | 150°C |

The element represented by A such as Tl, etc. is superior to the element represented by B such as Co, etc. in the easy film preparation, but is inferior thereto in the oxidation resistance.

When in the foregoing recording film of Ge-Te-Sb-Tl system, Co was added and the Co content was varied while keeping the ratio of Ge to Te to Sb to Tl constant, the necessary laser beam power for the recording was changed as follows:

Recording laser power

| $\beta$ | = | 0 | 12 mW |
|---|---|---|---|
| $\beta$ | = | 0.5 | 12 mW |
| $\beta$ | = | 1 | 10 mW |
| $\beta$ | = | 2 | 9 mW |
| $\beta$ | = | 5 | 9 mW |
| $\beta$ | = | 10 | 10 mW |
| $\beta$ | = | 15 | 13 mW |

By containing both elements represented by A and B, the stability of recording points is increased.

In the foregoing Ge-Te-Sb-Co system and Ge-Te-Sb-Tl-Co system, a portion or the whole of Co can be replaced with at least one of Fe, Ni, Sc, Ti, V, Cr, Mn, Cu, Zn, Y, Zr, Nb, Mo, Ru, Rh, Pd, Ag, Cd, Hf, Ta, W, Re, Os, Ir, Pt and Au, whereby similar properties can be obtained. Among these elements, Ti, Ni and Pd are preferable with respect to the recording laser power; V and Cr are preferable with respect to the reproduced signal intensity; Fe and Rh are preferable with respect to the crystallization time; Zr and Mn are preferable with respect to the crystallization temperature; and Nb, Pt and Au are preferable with respect to the environment resistance.

Other inorganic transparent materials having compositions similar to $GeO_2$, $Al_2O_3$, $SiO_2$, $CeO_2$, $Y_2O_3$, SiO, Y-containing $ZrO_2$, $Ta_2O_5$, AlN, TaN, etc. are applicable as an intermediate layer and a protective layer in place of ZrS. An organic layer can be used, but the number of possible rewritting is decreased. When the intermediate layer has a film thickness of 3 to 40 nm, an interdiffusion between the recording film and the reflecting layer can be prevented at the recording and rewriting, but optically it can be regarded that there is substantially no intermediate layer. That is, a dependence of reflectivity on wavelength due to the light interference is similar to that of a two-layer structure of recording film and reflecting layer.

As a material for the reflecting layer, many semi-conductors, semi-metals, metals or their mixtures or their compounds such as Bi, $Bi_2Te_3$, Te, Sn, Sb, Al, Au, Pb, Ni-Cr, etc. could be used in place of Ni.

The recording film of this Example also had a good oxidation resistance, and even if there were pinholes on the protective layer, no further oxidation proceeded in the neighborhood of the pinholes.

In case of the disk with no Ni reflective layers, noises due to the recording and rewritting a little increased, but the disk itself was sufficiently practically applicable. In this case, a range of the thickness of the recording film was preferably 60 nm to 350 nm, more preferably 80 nm to 200 nm.

As explained above, the present invention can provide an information-recording medium with distinguished recording and reproducing characteristics and a prolonged stability according to a simple method with a good reproducibility. Rewriting of information can be made many times.

Recording by an electric current to the same recording thin films mentioned in this Example is possible by sandwiching each of them between electrodes.

## Claims

1. An information-recording thin film capable of changing an atomic configuration upon exposure to a recording beam or an electric current, formed on a substrate directly or through a protective layer composed of at least one of inorganic materials and organic materials, the information-recording thin film comrising at least Ge, Te, Sb and other elements, **characterized in that** the average composition in the direction perpendicular to the film plane of the information-recording thin film is represented by the following general formula:

$$Ge_XTe_YSb_ZA_\alpha B_\beta$$

optionally containing one or more other elements wherein X, Y, Z, $\alpha$ and $\beta$ are in ranges of $2 \leqq X \leqq 9$, $45 \leqq Y \leqq 70$, $11 \leqq Z \leqq 54$, $0 \leqq \alpha \leqq 20$, $0 \leqq \beta \leqq 20$ and $1 \leqq \alpha + \beta \leqq 20$ in atomic percentages, A is at least one element of Tl, halogen elements and alkali metal elements and B is at least one element of Co, Fe, Ni, Sc, Ti, V, Cr, Mn, Cu, Zn, Y, Zr, Nb, Mo, Ru, Rh, Pd, Ag, Cd, Hf, Ta, W, Re, Os, Ir, Pt and Au.

2. An information-recording thin film according to claim 1, wherein the element represented by A is Tl.

3. An information-recording thin film according to claim 1, wherein the element represented by B is Co.

4. An information-recording thin film according to claim 1, wherein the atomic percentage of the elements represented by B is represented by the following formula:

$$2 \leqq \beta \leqq 15$$

5. A method for recording and reproducing information which comprises a step of exposing to a recording energy beam an information-recording thin film comprising at least Ge, Te, Sb and other elements provided on a substrate directly or through a protective layer composed of at least one of inorganic materials and organic materials, **characterized in that** the average composition in the direction perpendicular to the film plane of the information-recording thin film is represented by the general formula:

$$Ge_XTe_YSb_ZA_\alpha B_\beta$$

optionally containing one or more other elements, wherein X, Y, Z, $\alpha$ and $\beta$ are in ranges of $2 \leqq X \leqq 9$, $45 \leqq Y \leqq 70$, $11 \leqq Z \leqq 54$, $0 \leqq \alpha \leqq 20$ and $0 \leqq \beta \leqq 20$ and $1 \leqq \alpha + \beta \leqq 20$ in atomic percentage, A is at least one element of Tl, halogen elements and alkali metal elements and B is at least one element of Co, Fe, Ni, Sc, Ti, V, Cr, Mn, Cu, Zn, Y, Zr, Nb, Mo, Ru, Rh, Pd, Ag, Cd, Hf, Ta, W, Re, Os, Ir, Pt, and An, thereby changing the atomic configuration at the exposed part of the thin film, and a step of exposing the thin film to a reproducing beam, thereby reading out the change in the atomic configuration.

6. A method according to claim 5, wherein the element represented by A is Tl.

7. A method according to claim 5, wherein the element represented by B is Co.

8. A method according to claim 5, wherein the recording energy beam is a laser beam.

9. A method according to claim 5, wherein the atomic percentage of the elements represented by B is represented by the following formula:

$$2 \leqq \beta \leqq 15$$

**Patentansprüche**

1. Informationsaufzeichnungs-Dünnfilm, welcher in der Lage ist, die Atomkonfiguration zu ändern, wenn er einem Aufzeichnungsstrahl oder einem elektrischen Strom ausgesetzt wird, und der direkt oder über eine Schutzschicht, welche aus mindestens einem aus anorganischen Materialien und organischen Materialien zusammengesetzt ist, auf einem Substrat gebildet ist, wobei der Informationsaufzeichnungs-Dünnfilm mindestens Ge, Te, Sb und andere Elemente umfaßt, **dadurch gekennzeichnet,** daß die durchschnittliche Zusammensetzung in der Richtung senkrecht zu der Filmebene des Informationsaufzeichnungs-Dünnfilms der folgenden allgemeinen Formel entspricht:

$$Ge_X Te_Y Sb_Z A_\alpha B_\beta$$

und wahlweise ein oder mehrere andere Elemente enthält, worin X, Y, Z, $\alpha$ und $\beta$ in den Bereichen von $2 \leq X \leq 9$, $45 \leq Y \leq 70$, $11 \leq Z \leq 54$, $0 \leq \alpha \leq 20.0 \leq \beta \leq 20$ und $1 \leq \alpha + \beta \leq 20$ auf Atomprozentbasis liegen, A mindestens ein Element aus Tl, Halogenelementen und Alkalimetallelementen ist und B mindestens ein Element aus Co, Fe, Ni, Sc, Ti, V, Cr, Mn, Cu, Zn, Y, Zr, Nb, Mo, Ru, Rh, Pd, Ag, Cd, Hf, Ta, W, Re, Os, Ir, Pt und Au ist.

2. Informationsaufzeichnungs-Dünnfilm nach Anspruch 1, wobei das durch A angegebene Element Tl ist.

3. Informationsaufzeichnungs-Dünnfilm nach Anspruch 1, wobei das durch B angegebene Element Co ist.

4. Informationsaufzeichnungs-Dünnfilm nach Anspruch 1, wobei der Atomprozentanteil der durch B angegebenen Elemente durch die folgende Formel wiedergegeben wird:

$$2 \leq \beta \leq 15$$

5. Verfahren der Aufzeichnung und Wiedergabe von Informationen, umfassend einen Schritt des Aussetzens eines Informationsaufzeichnungs-Dünnfilms, welcher mindestens Ge, Te. Sb und andere Elemente umfaßt, und der direkt oder über eine Schutzschicht, welche aus mindestens einem aus anorganischen Materialien und organischen Materialien zusammengesetzt ist, auf einem Substrat gebildet ist, einem Aufzeichnungsenergiestrahl, **dadurch ge- kennzeichnet,** daß die durchschnittliche Zusammensetzung in der Richtung senkrecht zu der Filmebene des Informationsaufzeichnungs-Dünnfilms der allgemeinen Formel entspricht:

$$Ge_X Te_Y Sb_Z A_\alpha B_\beta$$

und wahlweise ein oder mehrere andere Elemente enthält, worin X, Y, Z, $\alpha$ und $\beta$ in den Bereichen von $2 \leq X \leq 9$, $45 \leq Y \leq 70$, $11 \leq Z \leq 54$, $0 \leq \alpha \leq 20$, $0 \leq \beta \leq 20$ und $1 \leq \alpha + \beta \leq 20$ auf Atomprozentbasis liegen. A mindestens ein Element aus Tl, Halogenelementen und Alkalimetallelementen ist und B mindestens ein Element aus Co,Fe,Ni,Sc,Ti,V,Cr,Mn,Cu,Zn,Y,Zr,Nb,Mo,Ru,Rh,Pd,Ag,Cd,Hf,Ta, W, Re, Os, Ir, Pt und Au ist, wodurch die Atomkonfiguration am ausgesetzten Teil des Dünnfilms geändert wird, und einen Schritt des Aussetzens des Dünnfilms einem Wiedergabestrahl, wodurch die Änderung der Atomkonfiguration ausgelesen wird.

6. Verfahren nach Anspruch 5, wobei das durch A angegebene Element Tl ist.

7. Verfahren nach Anspruch 5, wobei das durch B angegebene Element Co ist.

8. Verfahren nach Anspruch 5, wobei der Aufzeichnungsenerglestrahl ein Laserstrahl ist.

9. Verfahren nach Anspruch 5, wobei der Atomprozentanteil des durch B angegebenen Elements durch die folgende Formel angegeben wird:

$$2 \leq \beta \leq 15$$

**Revendications**

1. Pellicule mince pour l'enregistrement d'informations, apte à modifier une configuration atomique lors de son exposition à un faisceau d'enregistrement ou à un courant électrique, formée sur un substrat directement ou moyennant l'interposition d'une couche protectrice constituée par des matériaux minéraux et/ou des matériaux organiques,la pellicule mince d'enregistrement d'informations comprenant au moins du Ge, Te, Sb et d'autres éléments, caractérisée en ce que la composition moyenne dans la direction perpendiculaire au plan de la pellicule mince d'enregistrement d'informations est représentée par la formule

générale suivante :

$$Ge_XTe_YSb_ZA_\alpha B_\beta$$

contenant facultativement un ou plusieurs autres éléments, X, Y, Z, $\alpha$ et $\beta$ se situant dans les gammes $2 \leq X \leq 9$, $45 \leq Y \leq 70$, $11 \leq Z \leq 54$, $0 \leq \alpha \leq 20$, $0 \leq \beta \leq 20$ et $1 \leq \alpha + \beta \leq 20$ en pourcentages atomiques, A étant au moins un élément parmi Tl, des éléments d'halogènes et des éléments de métaux alcalins et B au moins un élément parmi Co, Fe, Ni, Sc, Ti, V, Cr, Mn, Cu, Zn, Y, Zr, Nb, Mo, Ru, Rh, Pd, Ag, Cd, Hf, Ta, W, Re, Os, Ir, Pt et Au.

2. Pellicule mince d'enregistrement d'informations selon la revendication 1, dans laquelle l'élément représenté par A est le Tl.

3. Pellicule mince d'enregistrement d'informations selon la revendication 1, dans laquelle l'élément représenté par B est le Co.

4. Pellicule mince d'enregistrement d'informations selon la revendication 1, dans laquelle le pourcentage atomique des éléments représentés par B est fourni par la formule suivante :

$$2 \leq \beta \leq 15.$$

5. Procédé pour enregistrer et reproduire des informations, qui inclut une étape consistant à exposer à un faisceau d'énergie d'enregistrement, une pellicule mince d'enregistrement d'informations comprenant au moins du Ge, Te, Sb et d'autres éléments sur un substrat directement ou moyennant l'interposition d'une couche protectrice constituée par des matériaux minéraux et/ou des matériaux organiques, caractérisé en ce que la composition moyenne dans la direction perpendiculaire au plan de la pellicule mince d'enregistrement d'informations est représentée par la formule générale :

$$Ge_XTe_YSb_ZA_\alpha B_\beta$$

contenant facultativement un ou plusieurs autres éléments, X, Y, Z, $\alpha$ et $\beta$ se situant dans les gammes $2 \leq X \leq 9$, $45 \leq Y \leq 70$, $11 \leq Z \leq 54$, $0 \leq \alpha \leq 20$, $0 \leq \beta \leq 20$ et $1 \leq \alpha + \beta \leq 20$ en pourcentages atomiques, A étant au moins un élément parmi Tl, des éléments d'halogènes et des éléments de métaux alcalins et B au moins un élément parmi Co, Fe, Ni, Sc, Ti, V, Cr, Mn, Cu, Zn, Y, Zr, Nb, Mo, Ru, Rh, Pd, Ag, Cd, Hf, Ta, W, Re, Os, Ir, Pt et Au, ce qui modifie la configuration atomique dans la partie exposée de la pellicule mince, et une étape consistant à exposer la pellicule mince à un faisceau de reproduction, qui permet de lire la modification de la configuration atomique.

6. Procédé selon la revendication 5, dans lequel l'élément représenté par A est le Tl.

7. Procédé selon la revendication 5, dans lequel l'élément représenté par B est le Co.

8. Procédé selon la revendication 5, dans lequel le faisceau d'énergie d'enregistrement est un faisceau laser.

9. Procédé selon la revendication 5, dans lequel le pourcentage atomique des éléments représentés par B est fourni par la formule suivante :

$$2 \leq \beta \leq 15.$$

F I G. I

F I G. 2

F I G. 3